# EUROPÄISCHE PATENTSCHRIFT

(11) **EP 3 456 169 B1**
(45) Veröffentlichungstag und Bekanntmachung des Hinweises auf die Patenterteilung: **23.02.2022**
(21) Anmeldenummer: 18183835.0
(22) Anmeldetag: 17.07.2018
(51) Int. Cl.: A01D 41/127, G10K 11/178, H04R 1/10

(54) **LANDWIRTSCHAFTLICHE ARBEITSMASCHINE**
AGRICULTURAL MACHINE
ENGIN AGRICOLE

(30) Priorität: 13.09.2017 DE 102017121193
(43) Veröffentlichungstag der Anmeldung: 20.03.2019
(73) Patentinhaber: CLAAS Selbstfahrende Erntemaschinen GmbH, 33428 Harsewinkel (DE)
(72) Erfinder: Goße Hündfeld, Max, 48155 Münster (DE)
(74) Vertreter: CLAAS Gruppe

(56) Entgegenhaltungen:
- EP-A1- 1 221 280
- EP-A2- 1 044 596
- DE-A1- 19 926 552
- DE-A1-102008 013 846

## Beschreibung

Die vorliegende Erfindung betrifft eine landwirtschaftliche Arbeitsmaschine mit einer Fahrerkabine, insbesondere Traktor, Mähdrescher oder Feldhäcksler, zumindest einer Geräuschquelle außerhalb der Fahrerkabine sowie einem Geräuschdämpfungssystem zur Erfassung und Unterdrückung der von der zumindest einen Geräuschquelle in die Fahrerkabine übertragenen Schwingungen.

Aus der DE 10 2008 013 846 A1 und aus der EP1221280A sind landwirtschaftliche Arbeitsmaschinen der eingangs genannten Art bekannt. Die DE 10 2008 013 846 A1 beschreibt ein Geräuschdämpfungssystem, welches außerhalb einer Fahrerkabine auftretende Schwingungen, die durch Körperschall und über die Luft in die Fahrerkabine übertragen werden, mittels von einem Kompensatorelement abgestrahlten Schwingungen auslöscht. Hierzu ist das Kompensatorelement mit einer an die Phase und Amplitude der übertragenen Schwingung angepassten Phase und Amplitude antreibbar, um eine Schallschwingung zu emittieren, welche die in die Fahrerkabine übertragene Schwingung kompensiert. Indem die von dem Kompensatorelement abgestrahlte Schwingung die von außen übertragene auslöscht, wird der Schallpegel in der Kabine merklich reduziert. Mit dem Löschen geht jedoch auch ein akustischer Informationsverlust einher bzw. wird eine Veränderung des Klangbildes der in das Innere der Fahrerkabine übertragenen Schwingungen bewirkt.

Aufgabe der vorliegenden Erfindung ist es, ein landwirtschaftliche Arbeitsmaschine der eingangs genannten Art weiterzubilden, sodass eine sich in einer Fahrerkabine befindliche Bedienperson in die Lage versetzt wird, bei aktiver Geräuschdämpfung bzw. Unterdrückung durch ein Geräuschdämpfungssystem unterschiedliche Betriebszustände einer Geräuschquelle der landwirtschaftlichen Arbeitsmaschine erkennen zu können.

Diese Aufgabe wird erfindungsgemäß durch eine landwirtschaftliche Arbeitsmaschine gemäß dem Anspruch 1 gelöst.

Vorteilhafte Weiterbildungen sind Gegenstand der Unteransprüche.

Gemäß dem Anspruch 1 wird eine landwirtschaftliche Arbeitsmaschine mit einer Fahrerkabine, zumindest einer Geräuschquelle außerhalb der Fahrerkabine sowie einem Geräuschdämpfungssystem zur Unterdrückung der von der zumindest einen Geräuschquelle in die Fahrerkabine übertragenen Schwingungen vorgeschlagen. Unter einer landwirtschaftlichen Arbeitsmaschine wird insbesondere ein Traktor, eine Feldhäcksler oder ein Mähdrescher verstanden. Um eine sich in einer Fahrerkabine befindliche Bedienperson in die Lage zu versetzen, bei aktiver Geräuschdämpfung bzw. Unterdrückung durch das Geräuschdämpfungssystem unterschiedliche Betriebszustände einer Geräuschquelle der landwirtschaftlichen Arbeitsmaschine erkennen zu können, ist vorgesehen, dass das Geräuschdämpfungssystem zur Erzeugung und Wiedergabe von akustischen Nutzsignalen eingerichtet ist, die in die Fahrerkabine eingeleitet werden. Als Geräuschquelle der landwirtschaftlichen Arbeitsmaschine sind deren Antriebsaggregat, insbesondere ein Verbrennungsmotor, und/oder wenigstens ein der Be- oder Verarbeitung dienendes Arbeitsaggregat anzusehen, welches an der landwirtschaftlichen Arbeitsmaschine angeordnet oder dieser zugeordnet ist. Unter akustischen Nutzsignalen sind hierbei Geräusche, d.h. durch Schwingungen hervorgerufene Luftdruckschwankungen, die von der Bedienperson als Geräusche wahrgenommen, beispielsweise Maschinengeräusche, von bestimmten, sicherheits- oder leistungsrelevanten Aggregaten zu verstehen. Hierzu zählen das Antriebsaggregat sowie das wenigstens eine Arbeitsaggregat der landwirtschaftlichen Arbeitsmaschine. Diese akustischen Nutzsignale werden von einer in der Fahrerkabine befindlichen Bedienperson intuitiv wahrgenommen, ohne dass es dazu einer aktiven Überwachung und Wahrnehmung durch die Bedienperson bedarf, wie dies bei optischen Anzeigen oder Signalen der Fall ist. Die Einleitung der akustischen Nutzsignale durch das Geräuschdämpfungssystem in die Fahrerkabine kann selektiv erfolgen. So kann das Geräuschdämpfungssystem dazu eingerichtet sein, aufgrund einer Vorgabe durch die Bedienperson akustische Nutzsignale nur einer zu überwachenden Geräuschquelle, beispielsweise des Antriebsaggregates oder des wenigstens einen Arbeitsaggregates, in die Fahrerkabine einzuleiten.

Erfindungsgemäss erfolgt die Erfassung der jeweiligen akustischen Nutzsignale im Bereich oder unmittelbar an der zumindest einen Geräuschquelle und/oder in der Kabine.

Hierzu kann das Geräuschdämpfungssystem die Drehzahl, das Vibrationsspektrum oder andere Parameter der zumindest einen zu überwachenden Geräuschquelle erfassen. Die Erfassung der Nutzsignale an der zumindest einen Geräuschquelle hat den Vorteil, dass bei Änderungen im Schwingungsverhalten der Geräuschquelle eine Anpassung des Geräuschdämpfungssystems an die zu weiterhin zu unterdrückenden Geräusche möglich wird, bevor diese die Fahrerkabine erreichen. Hingegen ist die Erfassung der akustischen Nutzsignale im Inneren der Fahrerkabine insofern vorteilhaft, da hierbei von dem Geräuschdämpfungssystem der Bedienperson vertraute Geräusche erfasst und aufbereitet werden, so dass eine Umgewöhnung des Bedieners an eine geänderte Klangcharakteristik der erzeugten und wiedergegebenen akustischen Nutzsignale entfällt.

Die Erfindung sieht vor, dass das Geräuschdämpfungssystem zur aktiven Dämpfung der Schwingungen eingerichtet ist, die von einem Frequenzspektrum der akustischen Nutzsignale abweichen.

Insbesondere kann das Geräuschdämpfungssystem zur Unterdrückung der von der zumindest einen Geräuschquelle in die Fahrerkabine übertragenen Schwingungen einen Kopfhörer umfassen. Auf diese Weise kann auf zusätzliche Lautsprecher in der Fahrerkabine verzichtet werden, die der Einleitung von Schwingungen dienen, um die Geräusche der zumindest einen Geräuschquelle durch destruktive Interfenz wenigstens teilweise zu löschen. Die Übertragung der Schwingungen auf den Kopfhörer kann hierzu drahtgebunden oder drahtlos erfolgen.

Dabei kann der Kopfhörer zur aktiven Unterdrückung der von der zumindest einen Geräuschquelle in die Fahrerkabine übertragenen Schwingungen und zur Wiedergabe nur der akustischen Nutzsignalen eingerichtet sein. Dies hätte den Vorteil, dass einerseits die in die Fahrerkabine eingeleiteten Geräusche unterdrückt werden, die Klangcharakteristik der zur Wiedergabe vorgesehenen Nutzsignale jedoch erhalten bleibt.

Alternativ kann der Kopfhörer zur passiven Unterdrückung der von der zumindest einen Geräuschquelle in die Fahrerkabine übertragenen Schwingungen durch Einspielen geräuschdämpfender Schwingungen und zur Wiedergabe nur der akustischen Nutzsignalen eingerichtet sein. Dies stellt eine kostengünstigere Variante gegenüber dem Kopfhörer mit aktiver Lärmkompensation dar.

Eine vorteilhafte Weiterbildung sieht vor, dass das Geräuschdämpfungssystem zu einer differenzierbaren Aufbereitung des akustischen Nutzsignales der zumindest einen Geräuschquelle in Abhängigkeit von deren Betriebszustand eingerichtet ist. Die akustischen Nutzsignale können durch geeignete Filterung, Erzeugung höherer Ordnungen, Verstärkung oder Abschwächung aufbereitet und dem Fahrer über einen geeigneten Audiokanal zur Verfügung gestellt werden. Hierbei könnte zum Beispiel bei einem Auftreten eines kritischen Betriebszustandes der Geräuschquelle das von dieser erfasste akustische Nutzsignal im Pegel angehoben werden, Denkbar ist aber auch, das akustische Nutzsignal in kritischen Fällen in einer Weise aufzubereiten, dass es rauer oder disharmonischer klingt, beispielsweise sägezahnartig, und somit für die Bedienperson unangenehmer klingt und damit schneller wahrnehmbar ist. Durch das Geräuschdämpfungssystem wird die Verwendung einer aktiven Lärmkompensation zum Schutz der Bedienperson ermöglicht, ohne Einschränkungen oder Verzicht auf akustische Informationen zum Betriebszustand einzelner Geräuschquellen der landwirtschaftlichen Arbeitsmaschine.

So kann das Geräuschdämpfungssystem dazu eingerichtet sein, das jeweilige akustische Nutzsignal der zumindest einen Geräuschquelle in regulärem Betriebszustand harmonischer wiederzugeben als in einem kritischen Betriebszustand.

Weiterhin kann das Geräuschdämpfungssystem dazu eingerichtet sein, verschiedene Abstufungen kritischer Betriebszustände durch Frequenz- und Amplitudenanpassung des jeweiligen akustischen Nutzsignales akustisch differenzierbar wiederzugeben. Auf diese Weise kann eine Bedienperson trotz der vorgesehenen Geräuschdämpfung das Betriebsverhalten der zumindest einen Geräuschquelle überwachen und aktiv eingreifen, wenn sich der Betriebszustand sukzessive einem kritischen Situation nähert die zum Ausfall führen könnte.

Bevorzugt kann das Geräuschdämpfungssystem dazu eingerichtet sein, die Frequenz- und Amplitudenanpassung in diskreten Schritten oder stetig ansteigend vorzunehmen. Insbesondere eine sprunghafte Anhebung der Amplitude und/oder Veränderung der Frequenz führt zu einer erhöhten Aufmerksamkeit durch die Bedienperson. Dadurch kann diese zeitnah auf einen sich anbahnenden kritischen Betriebszustand einer Geräuschquelle einstellen respektive reagieren.

Eine Vorteilhafte Weiterbildung sieht vor, dass das Geräuschdämpfungssystem dazu eingerichtet ist, wenigstens einen Betriebsparameter zumindest eines Geräuschquelle der Arbeitsmaschine kontinuierlich zu erfassen, auszuwerten und durch Modulation in akustische Nutzsignale umzuwandeln. Statt mittels eines der jeweiligen Geräuschquelle zugeordneten akustischen Sensors diese zu überwachen, ist es vielmehr denkbar, einen spezifischen, in der Regel bereits sensorisch überwachten, Betriebsparameter zu erfassen und auszuwerten. Durch Modulation der ausgewerteten Betriebsparameter lassen sich Sinuswellen erzeugen, deren Harmonische höherer Ordnung als akustische Nutzsignale bereitgestellt werden. Beispielhaft sei die Drehzahlüberwachung des Verbrennungsmotors, und/oder des wenigstens einen der Be- oder Verarbeitung dienenden Arbeitsaggregates genannt, welche zur Steuerung oder Regelung der Arbeitsmaschine mittels entsprechender Drehzahlsensoren durchgeführt wird.

Die vorliegende Erfindung wird nachstehend anhand eines in den Zeichnungen dargestellten Ausführungsbeispieles näher erläutert.

Es zeigen:
- Fig. 1: eine schematische Ansicht einer als Traktor ausgeführten landwirtschaftlichen Arbeitsmaschine;
- Fig. 2: eine schematische Ansicht eines als Mähdrescher ausgeführten landwirtschaftlichen Arbeitsmaschine;
- Fig. 3: eine schematische Ansicht einer als Feldhäcksler ausgeführten landwirtschaftlichen Arbeitsmaschine;
- Fig. 4: eine schematische Darstellung eines Geräuschdämpfungssystems.

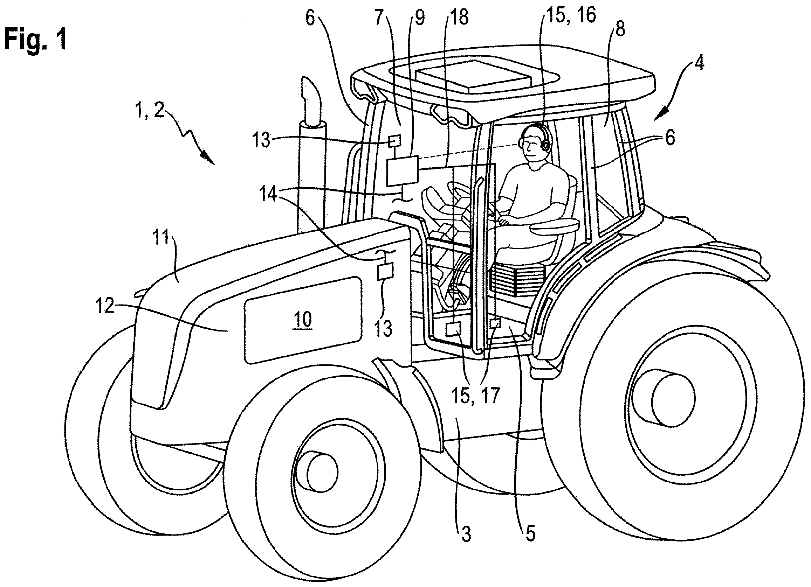

In Fig. 1 ist eine landwirtschaftliche Arbeitsmaschine 1 in Gestalt eines Traktors 2 schematisch in perspektivischer Ansicht dargestellt, wobei der grundsätzliche Aufbau eines solchen Traktors als dem Fachmann bekannt angesehen wird. Eine landwirtschaftliche Arbeitsmaschine 1 im Sinne der Erfindung kann jede zur landwirtschaftlichen Arbeit einsetzbare Arbeitsmaschine sein, beispielsweise ein Traktor, ein Teleskoplader, oder eine selbstfahrende Erntemaschine wie ein Mähdrescher oder Feldhäcksler.

Der Traktor 2 weist umfasst eine Vielzahl von Karosserieteilen, welche an einem Fahrzeugrahmen 3 angerordnet sind. Zur Aufnahme einer Bedienperson ist eine geschlossene Fahrerkabine 4 vorgesehen. Die Fahrerkabine 4 ist auf dem Fahrzeugrahmen 3 des Traktors 2 angeordnet. Die Fahrerkabine 4 umfasst einen Kabinenboden 5, mit welchem sie an dem Fahrzeugrahmen 3 angeordnet ist. Weiterhin umfasst die Fahrerkabine 4 einen Kabinenrahmen 6, an welchem eine Frontscheibe 7 sowie Seitenscheiben 8 angebracht sind. Innerhalb der Fahrerkabine 4 ist üblicherweise eine als Bedien- und Steuersystem 9 ausgeführte Steuerungsvorrichtung zur Bedienung und Steuerung der landwirtschaftlichen Arbeitsmaschine 1 respektive des Traktors 2 angeordnet. Das Bedien- und Steuersystem 9 umfasst Eingabe- und Ausgabemittel 45 zur Interaktion der Bedienperson mit diesem. Zum Antrieb und zur Bereitstellung der zum Betrieb des Traktors 2 benötigten Leistung, weist der Traktor 2 ein Antriebsaggregat 10 in Form eines Verbrennungsmotors auf. Das Antriebsaggregat 10 ist unter einer in einer geschlossenen Position dargestellten Abdeckhaube 11 angeordnet. Die Abdeckhaube 11 bildet, zumindest teilweise, mit weiteren Karosseriebauteilen des Traktors 2 einen Motorraum 12 im Wesentlichen um das Antriebsaggregat 10 herum aus.

In dem das Antriebsaggregat 10 umgebenden Motorraum 12 ist zumindest ein akustischer Sensor 13 angeordnet, welcher der Erfassung von Geräuschen des im Betrieb befindlichen Antriebsaggregates 10 dient. Die von dem akustischen Sensor 13 erzeugten Signale werden von dem Bedien- und Steuersystem 9 empfangen und ausgewertet. Hierzu ist der zumindest eine akustische Sensor 13 durch eine Signalleitung 14 mit dem Bedien- und Steuersystem 9 verbunden. Darüber hinaus kann der zumindest eine akustische Sensor 13 in der Fahrerkabine 4 angeordnet sein. Alternativ kann eine zusätzliche Steuereinheit an dem landwirtschaftlichen Fahrzeug vorgesehen sein, die dem Empfang und der Auswertung der Geräusche repräsentierenden Signale dient.

In der Fahrerkabine 4 ist zumindest ein Aktor 15, der zur Erzeugung von, insbesondere niederfrequenten, Schwingungen eingerichtet ist, vorgesehen. Hierzu trägt die in der Fahrerkabine 4 befindliche Bedienperson einen als Kopfhörer 16 ausgebildeten Aktor 15, welcher mit dem Bedien- und Steuersystem 9 vorzugsweise drahtlos, beispielsweise via Bluetooth, verbunden ist.

Zusätzlich kann in der Fahrerkabine 4 wenigstens ein weiterer Aktor 15 angeordnet sein, er als Lautsprecher 17 ausgeführt ist. Der als Lautsprecher 17 ausgeführte Aktor 15 ist zur Erzeugung von Schwingungen eingerichtet und mit dem Bedienund Steuersystem 9 durch eine Signalleitung 18 verbunden.

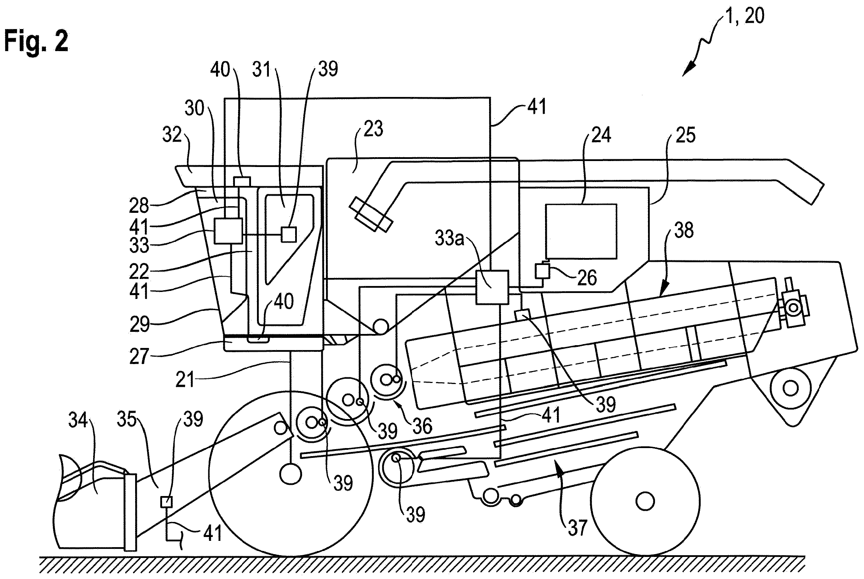

In der Fig. 2 ist mit 20 eine als selbstfahrender Mähdrescher ausgeführte landwirtschaftliche Arbeitsmaschine 1 bezeichnet, der eine an einem Fahrzeugrahmen 21 angeordnete Fahrerkabine 22, einen hinter dieser liegenden Korntank 23 sowie sich anschließend an diesen ein als Verbrennungsmotor ausgeführtes Antriebsaggregat 24 aufweist, der von einem Motorgehäuse 25 abschnittsweise umgeben ist. In dem das Antriebsaggregat 24 umgebenden Raum ist ein akustischer Sensor 26 angeordnet, welcher der Erfassung von Geräuschen des im Betrieb befindlichen Antriebsaggregates 24 dient.

Die Fahrerkabine 22 umfasst einen Boden 27, mit welchem die Fahrerkabine 22 an dem Fahrzeugrahmen 21 des Mähdreschers 20 angeordnet ist. Weiterhin umfasst die Fahrerkabine 22 einen Kabinenrahmen 28, an welchem eine Frontscheibe 29 sowie Seitenscheiben 30 und eine Kabinentür 31 angebracht sind. Die Fahrerkabine 22 wird nach oben durch ein Kabinendach 32 begrenzt. Innerhalb der Fahrerkabine 22 ist ein Bedien- und Steuersystem 33 zur Bedienung und Steuerung des landwirtschaftlichen Fahrzeugs 1 respektive des Mähdreschers 20 angeordnet.

Weiterhin weist der Mähdrescher 20 eine zusätzliche Steuereinheit 33a auf. Die Steuereinheit 33a ist signaltechnisch mit dem akustischen Sensor 26 am Antriebsaggregat 24 sowie mit weiteren akustischer Sensoren 39 verbunden, von denen einer in der Fahrerkabine 22 angeordnet ist. Die Steuereinheit 33a empfängt Signale, welche die im laufenden Betrieb erzeugten Geräusche repräsentieren, und wertet diese aus. Im Anschluss an deren Auswertung werden diese Signale an das Bedien- und Steuersystem 33 weitergeleitet. Selbstverständlich kann das Empfangen und Auswerten der Signale der akustischen Sensoren 26 und 39 auch unmittelbar durch die Bedien- und Steuersystem 33 erfolgen.

Des Weiteren umfasst der Mähdrescher 20 ein als Vorsatzgerät 34 ausgeführtes Arbeitsaggregat, welches an einem Schrägförderer 35 des Mähdreschers 20 angeordnet ist. Dem Schrägförderer 35 nachgeordnet ist ein als Dreschwerk 36 ausgeführtes Arbeitsaggregat angeordnet, welches dem Bearbeiten von Erntegut dient, welches mit dem Vorsatzgerät 34 aufgenommen und dem Dreschwerk 36 durch den Schrägförderer 35 zugeführt wird. Von dem Dreschwerk 36 verarbeitetes, im Wesentlichen aus Kornbestandteilen bestehendes Erntegut gelangt von diesem zu einer Reinigungsvorrichtung 37. Ein im Wesentlichen aus Nichtkornbestandteilen bestehender Erntegutstrom wird von dem Dreschwerk 36 an eine Abscheidevorrichtung 38 weitergeleitet, welche in dem Erntegutstrom befindliche Kornbestandteile ausscheidet und diese an die Reinigungsvorrichtung 37 abgibt. Sowohl bei der Reinigungsvorrichtung 37 als auch bei der Abscheidevorrichtung 38 handelt es sich um Arbeitsaggregate des Mähdreschers 20, welche, wie auch das Vorsatzgerät 34 und der Schrägförderer 35, von dem als Verbrennungsmotor ausgebildeten Antriebsaggregat 24 angetrieben werden. Einem oder mehreren dieser Arbeitsaggregate kann ebenfalls ein akustischer Sensor 39 zugeordnet sein.

In der Fahrerkabine 22 des Mähdreschers 20 befinden sich im Boden 27 sowie im Kabinendach 32 Aktoren 40, welche zur Erzeugung von Schwingungen eingerichtet sind. Die Aktoren 40 sind zu ihrer Ansteuerung durch Signalleitungen 41 mit dem Bedien- und Steuersystem 33 verbunden.

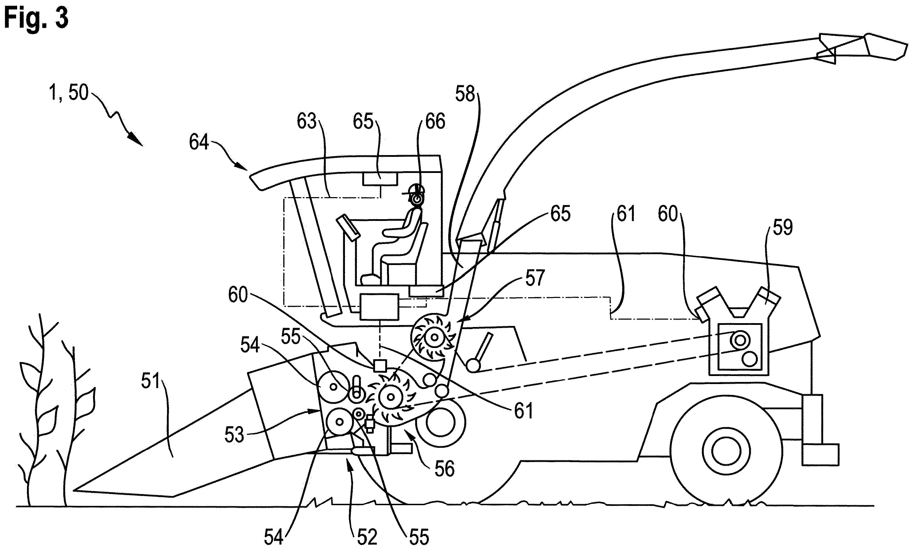

De Darstellung in Fig. 3 zeigt eine schematische Ansicht einer als selbstfahrender Feldhäcksler 50 ausgeführten landwirtschaftlichen Arbeitsmaschine 1. Der Feldhäcksler ist mit einem Erntevorsatz 51 zum Abernten von Erntegut ausgestattet. Der Feldhäcksler 1 weist eine Vorpresseinheit 52 auf, die als Zuführeinrichtung für das Erntegut fungiert. Die Vorpresseinheit 52 ist mit mindestens zwei, hier insgesamt vier, einen Presskanal 53 ausbildende Vorpresswalzen 54, 55 ausgestattet. Dabei übernehmen die vorderen Vorpresswalzen 54 eine Vorverdichtung des aufgenommenen Ernteguts, während die hinteren Vorpresswalzen 55 eine gleichmäßige Verdichtung und einen Weitertransport des Ernteguts übernehmen.

Das Häckseln des aufgenommenen Ernteguts wird von einer Häckselvorrichtung 56 vorgenommen, an das sich eine Fördervorrichtung 57, ein sogenannter Nachbeschleuniger, für den Transport des gehäckselten Ernteguts in einen Auswurfkanal 58 anschließt. Die Häckselvorrichtung 56 weist eine Messertrommel mit daran angeordneten Häckselmessern auf, die für den Häckselprozess mit einer Gegenschneide zusammenwirken. Zum Antreiben der Arbeitsaggregate des Feldhäckslers 50 ist ein als Verbrennungsmotor ausgebildetes Antriebsaggregat 59 vorgesehen. Dem Antriebsaggregat 59 sowie der Häckselvorrichtung 56 ist jeweils ein akustischer Sensor 60 zugeordnet, welcher von dem Antriebsaggregat 59 bzw. der Häckselvorrichtung 56 erzeugte Geräusche erfasst und mittels einer Signalleitung 61 an ein Bedien- und Steuersystem 62 überträgt. Weitere akustische Sensoren können dem Nachbeschleuniger 57 oder einer der Häckselvorrichtung 56 nachgeordneten Konditioniereinrichtung zugeordnet sein. Das Bedien- und Steuersystem 62 wertet die Signale des jeweiligen akustischen Sensors 60 aus. Weiterhin weist der Feldhäcksler 50 eine Fahrerkabine 64 auf, in der ein weiterer akustischer Sensor 60 angeordnet ist. Im Inneren der Fahrerkabine 64 sind Aktoren 65 angeordnet, die zur Erzeugung von Schwingungen eingerichtet sind. Die Aktoren 65 sind durch Signalleitungen 63 mit dem Bedien- und Steuersystem 62 verbunden. Die in der Fahrerkabine 64 befindliche Bedienperson trägt einen Kopfhörer 66, welcher mit dem Bedien- und Steuersystem 62 drahtlos oder drahtgebunden verbunden ist.

Grundsätzlich ist die Anordnung eines akustischen Sensors nur in der Fahrerkabine der landwirtschaftlichen Arbeitsmaschine 1 denkbar. Die durch den nur einen akustischen Sensor erfassten Geräusche entsprechen im Klangbild somit im Wesentlichen denen, welche die im Inneren der Fahrerkabine befindliche Bedienperson wahrnimmt.

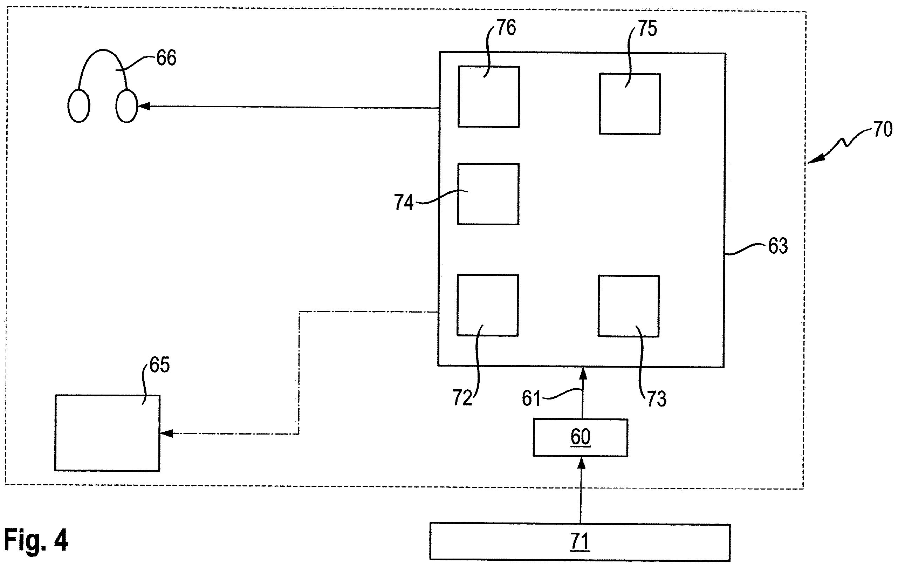

In Fig. 4 ist eine schematische Darstellung eines Geräuschdämpfungssystems 70 gezeigt, welches Teil der landwirtschaftlichen Arbeitsmaschine 1 ist. Dem Geräuschdämpfungssystem 70 kommt die Aufgabe zu, Geräusche von zumindest einer Geräuschquelle 71 der Arbeitsmaschine 1 durch aktive Lärmkompensation zu dämpfen oder zu eliminieren. Als eine Geräuschquelle 71 kommt insbesondere das jeweilige Antriebsaggregat 10, 24 bzw. 59 in Betracht. Darüber hinaus stellen die verschiedenen weiteren Arbeitsaggregate des Mähdreschers 20 bzw. des Feldhäckslers 50, die der Be- und Verarbeitung von Erntegut dienen, Geräuschquellen 71 dar. Zum Schutz einer in der Fahrerkabine 4, 22 bzw. 64 befindlichen Bedienperson werden durch geeignete Ansteuerung durch das jeweilige Bedien- und Steuersystem 9, 33 bzw. 62 zur Dämpfung bzw. Elimination der Geräusche in der Fahrerkabine 4, 22 bzw. 64 auf der Grundlage der Auswertung der sensorisch erfassten Geräusche gegenpolige Schwingungen generiert und auf den wenigstens einen in der Fahrerkabine 4, 22 bzw. 64 befindlichen Aktor 15, 40, 65, 66 übertragen.

Darüber hinaus kommt dem Geräuschdämpfungssystem 70 die Aufgabe zu, akustische Nutzsignale zu erzeugen und wiederzugeben. Unter akustischen Nutzsignalen sind hierbei Geräusche, beispielsweise Maschinengeräusche, von bestimmten, sicherheits- oder leistungsrelevanten Antriebs- und/oder Arbeitsaggregaten der landwirtschaftlichen Arbeitsmaschine 1 zu verstehen. Die Beurteilung von Betriebszuständen von sicherheits- oder leistungsrelevanten Antriebs- und/oder Arbeitsaggregaten respektive Geräuschquellen 71 durch eine Bedienperson erfolgt oftmals auf Basis der akustischen Wahrnehmung. Um der Bedienperson diese intuitive Form der Überwachung trotz einer aktiven Lärmkompensation in der Fahrerkabine zu ermöglichen, werden die von dem wenigstens einen akustischen Sensor 13, 26, 60 erfassten Signale der zu überwachenden Geräuschquelle 71 von dem Bedien- und Steuersystem 9, 33 bzw. 62 durch geeignete Filterung, Erzeugung höherer Ordnungen, Verstärkung oder Abschwächung aufbereitet und der Bedienperson zur Verfügung gestellt. Dies geschieht mittels des Kopfhörers 16 bzw. 66. Das Bedien- und Steuersystem 9, 33 bzw. 62, welches Teil des Geräuschdämpfungssystems 70 ist, umfasst eine Auswerteeinheit 72 zur Auswertung der von den akustischen Sensoren13, 26 bzw. 60 erfassten Geräusche der Geräuschquelle 71. Weiterhin ist eine Filtereinheit 73 von dem Geräuschdämpfungssystem 70 umfasst, welche dem gezielten Herausfiltern der als akustische Nutzsignale an den Kopfhörer 16 bzw. 66 weiterzuleitenden Signale dient, eine Verstärkereinheit 74 sowie eine Modulationseinheit 75 zur Klangveränderung. Die Filtereinheit 73 umfasst hierzu zumindest einen Bandpassfilter, der durch das Bedien- und Steuersystem 9, 33 bzw. 62 individuell ansteuerbar ist. Für die Übertragung der akustischen Nutzsignale an den Kopfhörer 16 bzw. 66 ist eine Sendeeinheit 76 vorgesehen, welche die Signale bevorzugt drahtlos überträgt.

Eine alternative oder ergänzende Ausführungsform sieht vor, dass wenigstens ein sensorisch erfassbarer Betriebsparameter der jeweiligen Geräuschquelle 71, wie beispielsweise die Drehzahl, welche im Allgemeinen für den Betrieb der landwirtschaftlichen Arbeitsmaschine 1 grundsätzlich durch Drehzahlsensoren kontinuierlich erfasst und von dem Bedien- und Steuersystem 9, 33 bzw. 62 ausgewertet wird, herangezogen wird, um ein akustisches Nutzsignal zu generieren. Hierzu werden durch das Bedien- und Steuersystem 9, 33 bzw. 62 die Drehzahlsignale durch Modulation in sinusförmige Wellen umgewandelt, deren Harmonische höherer Ordnung, insbesondere 2. oder 3. Ordnung, als akustische Nutzsignale an den Kopfhörer 16 bzw. 66 weitergeleitetet werden.

Zur näheren Veranschaulichung wird die Funktionsweise des Geräuschdämpfungssystems 70 beispielhaft anhand der Überwachung des als Verbrennungsmotor ausgeführten Antriebsaggregates 59 des Feldhäckslers 50 erläutert.

Insbesondere beim Erntebetrieb des Feldhäckslers 50 ist die Erlangung akustischer Nutzsignale des Antriebsaggregates 59 von großer Bedeutung. Im laufenden Erntebetrieb wird die Drehzahl des Antriebsaggregates 59 bis an eine Untergrenze gedrückt, ab der eine Aufrechterhaltung des Betriebes des Antriebsaggregates 59 nicht mehr möglich ist, da hier das Leistungsmaximum liegt. Die maximale Leistung steht am sogenannten Kipppunkt des Antriebsaggregates 59 zur Verfügung. Wird der Kipppunkt unterschritten, folgt das Abwürgen des Antriebsaggregates 59. Aus wirtschaftlichen Gründen wird stets versucht das des Antriebsaggregates 59 nahe am Kipppunkt zu betreiben. Hierzu ist es erforderlich, dass die Bedienperson über hinreichend genaue Informationen zur Antriebsdrehzahl verfügt, damit das Antriebsaggregat 59 den Kipppunkt nicht unterschreitet. Eine optische Kontrolle des Drehzahlsignals ist hier nicht ausreichend, da die Bedienperson eine Vielzahl anderer Aufgaben während des Erntevorganges optisch wahrnehmen muss, wie die Überwachung des Überladevorganges, des Spurhaltens beim Überladen, des Gutflusses, und dergleichen mehr. Die akustische Überwachung der Drehzahl des Antriebsaggregates 59 erfolgt hingegen Intuitiv. Entsprechend stellt das Geräuschdämpfungssystem 70 akustische Nutzsignale bereit, die die Bedienperson über den Kopfhörer 66 erreichen. Darüber hinaus kann der Kopfhörer 66 zugleich die Funktion des als Lautsprecher 65 ausgeführten Aktors zur aktiven Lärmkompensation innehaben.

Dabei ist das Geräuschdämpfungssystem 70 zu einer differenzierbaren Aufbereitung des akustischen Nutzsignales der als Antriebsaggregat 59 ausgebildeten Geräuschquelle 71 in Abhängigkeit von dessen Betriebszustand eingerichtet. Das Geräuschdämpfungssystem 70 ist dazu eingerichtet, das jeweilige akustische Nutzsignal des Antriebsaggregates 59 in regulärem Betriebszustand harmonischer wiederzugeben als in einem kritischen Betriebszustand. Dabei ist das Geräuschdämpfungssystem 70 dazu eingerichtet, verschiedene Abstufungen kritischer Betriebszustände durch Frequenz- und Amplitudenanpassung des jeweiligen akustischen Nutzsignales akustisch differenzierbar wiederzugeben. Am Beispiel der Drückung des Antriebsaggregates 59 bedeutet dies, dass mit zunehmender Annäherung der Antriebsdrehzahl an den Kipppunkt die Aufbereitung des akustischen Nutzsignales durch das Geräuschdämpfungssystem 70 sich zunehmend verändert. Hierzu kann das akustische Nutzsignal im Pegel mittels der Verstärkereinheit 74 angehoben werden und darüber hinaus durch die Modulationseinheit 75 in der Weise aufbereitet werden, dass das Klangbild des Nutzsignals disharmonischer wird. Die vorstehend beschriebene Aufbereitung des akustischen Nutzsignals kann dabei in diskreten Schritten erfolgen, vorzugsweise sprunghaft, oder stetig ansteigend.

### Bezugszeichenliste

| | | | |
|---|---|---|---|
| 1 | Arbeitsmaschine | 33 | Bedien- und Steuersystem |
| 2 | Traktor | 33a | Steuereinheit |
| 3 | Fahrzeugrahmen | 34 | Vorsatzgerät |
| 4 | Fahrerkabine | 35 | Schrägförderer |
| 5 | Kabinenboden | 36 | Dreschwerk |
| 6 | Kabinenrahmen | 37 | Reinigungsvorrichtung |
| 7 | Frontscheibe | 38 | Abscheidevorrichtung |
| 8 | Seitenscheibe | 39 | Akustischer Sensor |
| 9 | Bedien- und Steuersystem | 40 | Aktor |
| 10 | Antriebsaggregat | 41 | Signalleitung |
| 11 | Abdeckhaube | 50 | Feldhäcksler |
| 12 | Motorraum | 51 | Erntevorsatz |
| 13 | Akustischer Sensor | 52 | Vorpresseinheit |
| 14 | Signalleitung | 53 | Presskanal |
| 15 | Aktor | 54 | Vorpresswalzen |
| 16 | Kopfhörer | 55 | Vorpresswalzen |
| 17 | Lautsprecher | 56 | Häckselvorrichtung |
| 18 | Signalleitung | 57 | Fördervorrichtung |
| 20 | Mähdrescher | 58 | Auswurfkanal |
| 21 | Fahrzeugrahmen | 59 | Antriebsaggregat |
| 22 | Fahrerkabine | 60 | Akustischer Sensor |
| 23 | Korntank | 61 | Signalleitung |
| 24 | Antriebsaggregat | 62 | Bedien- und Steuersystem |
| 25 | Motorgehäuse | 63 | Signalleitung |
| 26 | Akustischer Sensor | 64 | Fahrerkabine |
| 27 | Boden | 65 | Aktor |
| 28 | Kabinenrahmen | 66 | Kopfhörer |
| 29 | Frontscheibe | 70 | Geräuschdämpfungssystem |
| 30 | Seitenscheibe | 71 | Geräuschquelle |
| 31 | Kabinentür | 72 | Auswerteeinheit |
| 32 | Kabinendach | 73 | Filtereinheit |
| 74 | Verstärkereinheit | | |
| 75 | Modulationseinheit | | |
| 76 | Sendeeinheit | | |

## Patentansprüche

1. Landwirtschaftliche Arbeitsmaschine (1) mit einer Fahrerkabine (4, 22, 64), zumindest einer Geräuschquelle (71) außerhalb der Fahrerkabine (4, 22, 64) sowie einem Geräuschdämpfungssystem (70) zur Erfassung und Unterdrückung der von der zumindest einen Geräuschquelle (71) in die Fahrerkabine (4, 22, 64) übertragenen Schwingungen, **dadurch gekennzeichnet, dass** das Geräuschdämpfungssystem (70) zur Erzeugung und Wiedergabe von akustischen Nutzsignalen eingerichtet ist, die in die Fahrerkabine (4, 22, 64) eingeleitet werden, wobei eine Erfassung der jeweiligen akustischen Nutzsignale im Bereich oder unmittelbar an der zumindest einen Geräuschquelle (71) und/oder in der Kabine (4, 22, 64) erfolgt und das Geräuschdämpfungssystem (70) zur aktiven Dämpfung der Schwingungen eingerichtet ist, die von einem Frequenzspektrum der akustischen Nutzsignale abweichen.

2. Landwirtschaftliche Arbeitsmaschine (1) nach Anspruch 1, **dadurch gekennzeichnet, dass** das Geräuschdämpfungssystem (70) zur Unterdrückung der von der zumindest einen Geräuschquelle (71) in die Fahrerkabine (4, 22, 64) übertragenen Schwingungen einen Kopfhörer (16, 66) umfasst.

3. Landwirtschaftliche Arbeitsmaschine (1) nach Anspruch 2, **dadurch gekennzeichnet, dass** der Kopfhörer (16, 66) zur aktiven Unterdrückung der von der zumindest einen Geräuschquelle (71) in die Fahrerkabine (4, 22, 64) übertragenen Schwingungen und zur Wiedergabe nur der akustischen Nutzsignalen eingerichtet ist.

4. Landwirtschaftliche Arbeitsmaschine (1) nach Anspruch 2, **dadurch gekennzeichnet, dass** der Kopfhörer (16, 66) zur passiven Unterdrückung der von der zumindest einen Geräuschquelle (71) in die Fahrerkabine (4, 22, 64) übertragenen Schwingungen durch Einspielen geräuschdämpfender Schwingungen und zur Wiedergabe nur der akustischen Nutzsignalen eingerichtet ist.

5. Landwirtschaftliche Arbeitsmaschine (1) nach einem der vorangehenden Ansprüche, **dadurch gekennzeichnet, dass** das Geräuschdämpfungssystem (70) zu einer differenzierbaren Aufbereitung des akustischen Nutzsignales der zumindest einen Geräuschquelle (71) in Abhängigkeit von deren Betriebszustand eingerichtet ist.

6. Landwirtschaftliche Arbeitsmaschine (1) nach Anspruch 5, **dadurch gekennzeichnet, dass** das Geräuschdämpfungssystem (70) dazu eingerichtet ist, das jeweilige akustische Nutzsignal der zumindest einen Geräuschquelle (71) in regulärem Betriebszustand harmonischer wiederzugeben als in einem kritischen Betriebszustand.

7. Landwirtschaftliche Arbeitsmaschine (1) nach Anspruch 6, **dadurch gekennzeichnet, dass** das Geräuschdämpfungssystem (70) dazu eingerichtet ist, verschiedene Abstufungen kritischer Betriebszustände durch Frequenz- und/oder Amplitudenanpassung des jeweiligen akustischen Nutzsignales akustisch differenzierbar wiederzugeben.

8. Landwirtschaftliche Arbeitsmaschine (1) nach Anspruch 7, **dadurch gekennzeichnet, dass** das Geräuschdämpfungssystem (70) dazu eingerichtet ist, die Frequenz- und/oder Amplitudenanpassung in diskreten Schritten oder stetig ansteigend vorzunehmen.

9. Landwirtschaftliche Arbeitsmaschine (1) nach einem der vorangehenden Ansprüche, **dadurch gekennzeichnet, dass** das Geräuschdämpfungssystem (70) dazu eingerichtet ist, wenigstens einen Betriebsparameter zumindest einer Geräuschquelle (71) der Arbeitsmaschine (1) kontinuierlich zu erfassen, auszuwerten und durch Modulation in akustische Nutzsignale umzuwandeln.

## Claims

1. An agricultural working machine (1) having a driver's cabin (4, 22, 64), at least one source of noise (71) outside the driver's cabin (4, 22, 64) as well as a noise reduction system (70) for detecting and suppressing the vibrations transmitted from the at least one source of noise (71) into the driver's cabin (4, 22, 64), **characterized in that** the noise reduction system (70) is configured for the production and reproduction of wanted acoustic signals which are introduced into the driver's cabin (4, 22, 64), wherein a detection of the respective wanted acoustic signals is carried out in the region of or directly at the at least one source of noise (71) and/or in the cabin (4, 22, 64) and the noise reduction system (70) is configured for active damping of the vibrations which deviate from a spectrum of frequencies of the wanted acoustic signals.

2. The agricultural working machine (1) according to claim 1, **characterized in that** the noise reduction system (70) for suppressing the vibrations transmitted from the at least one source of noise (71) into the driver's cabin (4, 22, 64) comprises a headset (16, 66).

3. The agricultural working machine (1) according to claim 2, **characterized in that** the headset (16, 66) is configured for active suppression of the vibrations transmitted from the at least one source of noise (71) into the driver's cabin (4, 22, 64) and for the reproduction of only the wanted acoustic signals.

4. The agricultural working machine (1) according to claim 2, **characterized in that** the headset (16, 66) is configured for passive suppression of the vibrations transmitted from the at least one source of noise (71) into the driver's cabin (4, 22, 64) by introducing noise reducing vibrations and for reproducing only the wanted acoustic signals.

5. The agricultural working machine (1) according to one of the preceding claims, **characterized in that** the noise reduction system (70) is configured for differentiable processing of the wanted acoustic signal from the at least one source of noise (71) as a function of its operating status.

6. The agricultural working machine (1) according to claim 5, **characterized in that** the noise reduction system (70) is configured to reproduce the respective wanted acoustic signal from the at least one source of noise (71) in a more harmonious manner when the operating status is regular than when the operating status is critical.

7. The agricultural working machine (1) according to claim 6, **characterized in that** the noise reduction system (70) is configured to reproduce different gradations of critical operating statuses by adjusting the frequency and/or amplitude of the respective wanted acoustic signal in an acoustically differentiable manner.

8. The agricultural working machine (1) according to claim 7, **characterized in that** the noise reduction system (70) is configured to undertake the adjustment of the frequency and/or amplitude in discrete steps or in a steadily increasing manner.

9. The agricultural working machine (1) according to one of the preceding claims, **characterized in that** the noise reduction system (70) is configured to continuously detect, evaluate and convert into wanted acoustic signals, by modulation, at least one operating parameter of at least one source of noise (71) of the working machine (1).

## Revendications

1. Machine de travail agricole (1) comprenant une cabine de conduite (4, 22, 64), au moins une source de bruit (71) à l'extérieur de la cabine de conduite (4, 22, 64) ainsi qu'un système d'insonorisation (70) pour détecter et supprimer les oscillations transmises dans la cabine de conduite (4, 22, 64) par la au moins une source de bruit (71), **caractérisée en ce que** le système d'insonorisation (70) est agencé pour générer et reproduire des signaux utiles acoustiques qui sont introduits dans la cabine de conduite (4, 22, 64), une détection des signaux utiles acoustiques respectifs s'effectuant dans la zone ou directement au niveau de la au moins un source de bruit (71) et/ou dans la cabine (4, 22, 64), et le système d'insonorisation (70) étant agencé pour l'amortissement actif des oscillations qui s'écartent d'un spectre de fréquences des signaux utiles acoustiques.

2. Machine de travail agricole (1) selon la revendication 1, **caractérisée en ce que** le système d'insonorisation (70) inclut un casque d'écoute (16, 66) pour supprimer les oscillations transmises dans la cabine de conduite (4, 22, 64) par la au moins une source de bruit (71).

3. Machine de travail agricole (1) selon la revendication 2, **caractérisée en ce que** le casque d'écoute (16, 66) est agencé pour la suppression active des oscillations transmises dans la cabine de conduite (4, 22, 64) par la au moins une source de bruit (71) et pour la reproduction uniquement des signaux utiles acoustiques.

4. Machine de travail agricole (1) selon la revendication 2, **caractérisée en ce que** le casque d'écoute (16, 66) est agencé pour la suppression passive des oscillations transmises dans la cabine de conduite (4, 22, 64) par la au moins une source de bruit (71) par l'émission d'oscillations insonorisantes et pour la reproduction uniquement des signaux utiles acoustiques.

5. Machine de travail agricole (1) selon une des revendications précédentes, **caractérisé en ce que** le système d'insonorisation (70) est agencé pour une mise en forme différenciable du signal utile acoustique de la au moins une source de bruit (71) en fonction de son état de fonctionnement.

6. Machine de travail agricole (1) selon la revendication 5, **caractérisée en ce que** le système d'insonorisation (70) est agencé pour reproduire le signal utile acoustique respectif de la au moins une source de bruit (71) de manière plus harmonique dans un état de fonctionnement normal que dans un état de fonctionnement critique.

7. Machine de travail agricole (1) selon la revendication 6, **caractérisée en ce que** le système d'insonorisation (70) est agencé pour reproduire de manière acoustiquement différenciable divers degrés d'états de fonctionnement critique par une adaptation en fréquence et/ou en amplitude du signal utile acoustique respectif.

8. Machine de travail agricole (1) selon la revendication 7, **caractérisée en ce que** le système d'insonorisation (70) est agencé pour effectuer l'adaptation en fréquence et/ou en amplitude par pas discrets ou selon un accroissement continu.

9. Machine de travail agricole (1) selon une des revendications précédentes, **caractérisée en ce que** le système d'insonorisation (70) est agencé pour détecter en continu, analyser et convertir par modulation en signaux utiles acoustiques au moins un paramètre d'exploitation au moins d'une source de bruit (71) de la machine de travail (1).
